## Europäisches Patentamt
## European Patent Office
## Office européen des brevets

(11) Veröffentlichungsnummer: **0 236 925**
**B1**

(12) **EUROPÄISCHE PATENTSCHRIFT**

(45) Veröffentlichungstag der Patentschrift:
13.12.89

(51) Int. Cl.⁴: **F16B 5/10**, B60R 13/00, E04F 13/08

(21) Anmeldenummer: 87103048.2

(22) Anmeldetag: 04.03.87

(54) Taschenartige Klipsaufnahme.

(30) Priorität: 08.03.86 DE 3607782

(43) Veröffentlichungstag der Anmeldung:
16.09.87 Patentblatt 87/38

(45) Bekanntmachung des Hinweises auf die Patenterteilung:
13.12.89 Patentblatt 89/50

(84) Benannte Vertragsstaaten:
FR GB IT SE

(56) Entgegenhaltungen:
CH-A- 478 972
DE-A- 1 575 305
DE-B- 2 816 623
FR-A- 1 481 144

(73) Patentinhaber: Adam Opel Aktiengesellschaft,
Bahnhofsplatz 1 Postfach 17 10,
D-6090 Rüsselsheim(DE)

(72) Erfinder: Dehn, Klaus-Dieter, Dipl.-Ing.,
Steinernstrasse 30, D-6502 Mainz-Kostheim(DE)
Erfinder: Storch, Eberhard A., Dipl.-Ing.,
Gartenstrasse 45, D-6082 Mörfelden-Walldorf(DE)
Erfinder: Quistorf, Dieter, Dipl.-Ing., Waldstrasse 77,
D-6085 Nauheim(DE)
Erfinder: Weidner, Hans-Peter, Jahnstrasse 3,
D-6090 Rüsselsheim(DE)

(74) Vertreter: Rosenfeld, Jürgen, Dipl. Ing. et al, Adam Opel
Ag Patentabteilung Bahnhofsplatz 1 Postfach 17 10,
D-6090 Rüsselsheim(DE)

## Beschreibung

Die Erfindung bezieht sich auf eine Serie von taschenartigen Klipsaufnahmekörpern, die in einer bestimmten Anzahl und vorgegebenen Reihenfolge gegebenenfalls geordnet nach unterschiedlicher Dicke, in Positionierungsaufnahmen eines eine Wandverkleidung in Kraftfahrzeugen bildenden Formteils anzuordnen sind, zur Befestigung des Formteils an der Karosserie .

Üblicherweise werden Tür- und Wandverkleidungen für Kraftfahrzeuge als Formteile ausgeführt und mit Klipsen auf dem Tür- bzw. Karosserierohbau befestigt. Diese Klipse werden in taschenartige Klipsaufnahmekörper eingesetzt, die auf der Rückseite der Formteile und damit unsichtbar mechanisch aufgebracht sind. Je nach dem Material der Formteile werden die Klipsaufnahmekörper unterschiedlich an den Formteilen befestigt. Klipsaufnahmekörper aus Metall werden in das Trägerformwerkzeug eingelegt und beim Preßvorgang mit dem Trägermaterial verklammert. Klipsaufnahmekörper aus Kunststoff werden entweder in einem separaten Arbeitsgang auf dem fertigen Formteil aufgeklebt oder mittels Ultraschall verschweißt oder aber direkt bei der Herstellung des Formteils angebracht. Da die Klipse stets gleich sind, müssen unterschiedliche Abstände des als Verkleidung dienenden Formteils vom Türrohbau oder Karosserierohbau durch verschieden dicke Klipsaufnahmekörper ausgeglichen werden.

Das führt in der Produktion zu einer großen Teilevielfalt und zu einer aufwendigen Steuerung der Teilezuführung, was Verwechslungen der Klipsaufnahmekörper sowie Ausschuß mit sich bringen kann. Hiervon abgesehen, sind zur Herstellung der unterschiedlichen Klipsaufnahmekörper entsprechend viele unterschiedliche Werkzeuge erforderlich, was wiederum hohe Kosten verursacht.

Der Erfindung liegt die Aufgabe zugrunde, Klipsaufnahmekörper der eingangs genannten Art derart zu gestalten, daß zur Befestigung einer Wand- oder Türverkleidung nur ein einziges Bauteil für die Aufnahme aller Klipse erforderlich wird.

Diese Aufgabe wird erfindungsgemäß dadurch gelöst, daß die Klipsaufnahmekörper in der vorgegebenen Reihenfolge durch diese miteinander verbindende Stege zu einem einzigen Bauteil zusammengefaßt sind.

Die DB-A 2 816 623 zeigt zwar schon, wie bei einem Klemmprofil für Kabelmuffen, welches aus Teilstücken besteht, die Teilstücke mittels eines durchlaufenden Verbindungselementes miteinander verbunden sind. Die Verbindungselemente sollen aber nicht einzelne Bauteile miteinander verbinden, sondern genau umgekehrt, ein bisher einheitliches, relativ steifes Bauteil in mehrere, elastisch miteinander verbundene Abschnitte aufteilen, damit das Gesamtbauteil eine verbesserte Flexibilität besitzt.

Durch die erfindungsgemäße Zusammenfassung mehrerer Klipsaufnahmekörper zu einem einzigen Bauteil ergibt sich eine ganz wesentliche Verminderung der Produktionskosten. Insbesondere fallen die bisher erforderliche Teilevielfalt und Werkzeugvielfalt fort. Weiterhin verkürzt sich die Montagezeit, da das einzige Bauteil rascher in die Positionierungsaufnahmen der Formteile einzulegen ist als eine Vielzahl von Einzelelementen. Zugleich vermindern sich der Ausschuß und die Kosten für Nacharbeiten, da die das Bauteil bildenden Klipsaufnahmekörper zwangsläufig an die richtigen Stellen gelangen, wenn man das Bauteil auf das Formteil setzt.

Ganz besonders vorteilhaft ist eine Ausgestaltung der Erfindung, gemäss der die die Klipsaufnahmekörper verbindenden Stege mäanderförmig hin- und herschwingend ausgebildet sind. Hierdurch ist eine kompakte Werkzeugauslegung mit allen ihren Vorteilen, insbesondere Druckverhältnisse und Volumenbedarf des fertigen Spritzgutes, möglich. Transportschwierigkeiten werden durch die kompakte Anordnung weitgehend ausgeschlossen.

Wenn gemäß einer anderen Ausgestaltung der Erfindung die Stege der Klipsaufnahmekörper durch einen durch die Klipsaufnahmekörper hindurchgeführten Draht gebildet sind, dann kann man die Klipsaufnahmekörper einzeln fertigen und nachträglich durch den Draht zu einem einzigen Bauteil zusammenfassen. Dadurch kann man vor dem Verbinden der Klipsaufnahmekörper mit dem eine Verkleidung bildenden Formteil prüfen, ob die einzelnen, unterschiedlich dicken Klipsaufnahmekörper in der richtigen Reihenfolge auf dem Draht aufgezogen sind und dadurch Ausschuß vermeiden. Auch das Einlegen der einzelnen Klipsaufnahmekörper in die einzelnen Poitionierungsaufnahmen des Formteils kann durch die Zusammenfassung der Klipsaufnahmekörper zu einem Bauteil schneller erfolgen als bei Verwendung voneinander separater Klipsaufnahmekörper.

Für Wand- oder Türverkleidungen, die rundherum durch Klipse befestigt werden sollen, ist es günstig, wenn das Bauteil durch die Stege zu einem geschlossenen Ring, Rechteck oder dergleichen geformt ist.

Die Erfindung läßt zahlreiche Ausführungsformen zu. Eine davon ist in der Zeichnung dargestellt und wird nachfolgend beschrieben. Diese zeigt in

Fig. 1 eine räumliche Ansicht eines als Türverkleidung ausgebildeten Formteils mit erfindungsgemäß miteinander verbundenen Klipsaufnahmen,

Fig. 2 eine räumliche Ansicht eines als Türverkleidung ausgebildeten Formteils mit gegenüber der Figur 1 abweichend miteinander verbundenen Klipsaufnahmen,

Fig. 3 eine gegenüber den vorangehenden Figuren vergrößert dargestellte, räumliche Ansicht zweier, miteinander verbundener Klipsaufnahmen,

Fig. 4 eine der Figur 3 entpsrechende Darstellung zweier gegenüber Fig. 3 abweichend miteinander verbundener Klipsaufnahmen.

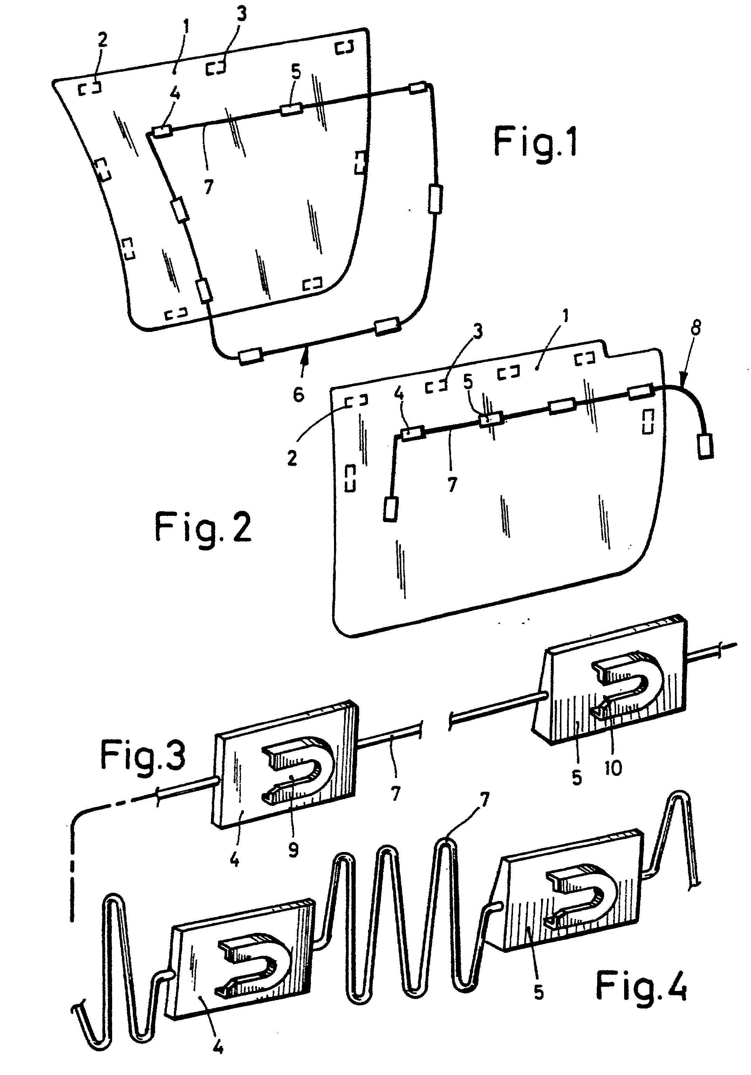

Die Figur 1 zeigt ein als Tür- oder Wandverkleidung dienendes Formteil 1, welches Positionierungsaufnahmen, wie zum Beispiel Positionierungsaufnahmen 2, 3, zur Anbringung von Klipsaufnahmen, beispielsweise den Klipsaufnahmen 4, 5, hat. Alle Klipsaufnahmen 4, 5, welche für das Formteil 1 vorgesehen sind, bilden zusammen ein geschlossenes Bauteil 6. Hierzu sind die einzelnen Klipsaufnahmen 4, 5 durch Stege 7 miteinander verbunden.

Bei der Ausführungsform gemäß der Figur 2 bilden die durch Stege 7 zusammengefaßten Klipsaufnahmn 4, 5 keinen geschlossenen Ring, wie in Figur 1, sondern ein offenes, u-förmiges Bauteil 8, weil bei der dort gezeigten Ausführungsform das Formteil nur im oberen Bereich durch Klipse in einem Türrohbau befestigt werden soll.

Die Figur 3 zeigt gegenüber den vorangegangenen Figuren stark vergrößert zwei Klipsaufnahmen 4, 5, welche durch den Steg 7 miteinander verbunden sind. Bei dem Steg 7 handelt es sich um einen Draht, der durch die einzelnen Klipsaufnahmen 4, 5 gezogen ist. Zu erkennen ist in der Figur 3 auch, daß die Klipsaufnahmen 4, 5 jeweils eine nach oben hin offene Tasche 9, 10 aufweisen, in die von der offenen Seite her jeweils ein üblicher Klips eingeschoben werden kann.

Bei der Ausführungsform gemäß der Figur 4 sind die Stege 7 zwischen den Klipsaufnahmen 4, 5 mäanderförmig gebogen. Die einzelnen Klipsaufnahmen müssen deshalb vor dem Verbinden mit dem Formteil 1 so weit auseinandergezogen werden, bis sie mit der jeweiligen Positionierungsaufnahme 2, 3 fluchten. Um Klebematerial und Gewicht einzusparen und etwaige Geräuschsquellen, nämlich vibrierende Stege 7 zwischen den Klipsaufnahmen 4, 5, auszuschalten, kann man beim Aufbringen der Klipsaufnahmen 4, 5 auf das Formteil 1 die Stege 7 abstanzen.

## Patentansprüche

1. Serie von taschenartigen Klipsaufnahmekörpern, die in einer bestimmten Anzahl und vorgegebenen Reihenfolge, gegebenenfalls geordnet nach unterschiedlicher Dicke, in Positionierungsaufnahmen eines eine Wandverkleidung bildenden Formteils anzuordnen sind, zur Befestigung des Formteils an der Karosserie, dadurch gekennzeichnet, daß die Klipsaufnahmekörper (4, 5) in der vorgegebenen Reihenfolge durch diese miteinander verbindende Stege (7) zu einem einzigen Bauteil (6, 8) zusammengefaßt sind.

2. Serie von taschenartigen Klipsaufnahmekörpern nach Anspruch 1, dadurch gekennzeichnet, daß die die Klipsaufnahmekörper (4, 5) verbindenden Stege (7) mäanderförmig hin- und herschwingend ausgebildet sind.

3. Serie von taschenartigen Klipsaufnahmekörpern nach Anspruch 1, dadurch gekennzeichnet, daß die Stege (7) durch einen durch die Klipsaufnahmekörper (4, 5) hindurchgeführten Draht gebildet sind.

4. Serie von taschenartigen Klipsaufnahmekörpern nach einem oder mehreren der vorangehenden Ansprüche, dadurch gekennzeichnet, daß das Bauteil (6) durch die Stege (7) zu einem geschlossenen Ring, Rechteck oder dergleichen geformt ist.

## Claims

1. A series of baglike clip receiving bodies, a specific number of which is to be arranged in a given sequence, preferably according to thickness, in positioning receptacles of a pre-shaped part forming a wall panel, for securing the pre-shaped part to the body of the vehicle, characterised in that the clip receiving bodies (4, 5) are collectively arranged in a single component part (6, 8) interconnected by webs (7) in a given sequence.

2. A series of baglike clip receiving bodies according to claim 1, characterised in that the webs (7) which interconnect the clip receiving bodies (4, 5) are meander-shaped for swinging to and fro.

3. A series of baglike clip receiving bodies according to claim 1, characterised in that the webs (7) are formed of a wire passing through the clip receiving bodies (4, 5).

4. A series of baglike clip receiving bodies according to at least one of the preceding claims, characterised in that the component part (6) through the webs (7) is formed into a closed ring, rectangle or the like.

## Revendications

1. Série de pièces de réception de clips, en forme de poche, destinées à être agencées, en nombre déterminé et selon un ordre préétabli, éventuellement en étant ordonnées selon des épaisseurs différentes, dans des logements de positionnement d'une pièce de forme constituant un habillement de paroi, pour fixer cette pièce de forme à la carrosserie, caractérisée par le fait que les pièces de réception de clips (4, 5) sont réunies en un composant unique (6, 8), dans l'ordre préétabli, par des âmes (7) de liaison.

2. Série de pièces de réception de clips selon revendication 1, caractérisée par le fait que les âmes de liaison (7) des pièces de réception de clips ont une forme sinueuse en méandres.

3. Série de pièces de réception de clips selon revendication 1, caractérisée par le fait que les âmes de liaison (7) sont constituées par un fil traversant lesdites pièces de réception de clips (4, 5).

4. Série de pièces de réception de clips selon une ou plusieurs des revendications précédentes, caractérisée par le fait que le composant (6) est réalisé avec les âmes de liaison (7), sous la forme d'un élément fermé en anneau, rectangle ou analogue.

Fig.1

Fig.2

Fig.3

Fig.4